# EUROPEAN PATENT SPECIFICATION

(11) **EP 0 544 675 B1**
(45) Date of publication and mention of the grant of the patent: **05.02.1997**
(21) Application number: 91909214.8
(22) Date of filing: 13.05.1991
(51) Int. Cl.: C08J 5/18, C08L 23/02

(54) **BIOLOGICALLY DEGRADABLE COVER FILM AND METHOD OF PREPARING THE SAME**
BIOLOGISCH ABBAUBARER ABDECKFILM UND VERFAHREN ZU SEINER HERSTELLUNG
FILM DE COUVERTURE BIODEGRADABLE ET PROCEDE DE PREPARATION

(30) Priority: 11.05.1990 FI 902373
(43) Date of publication of application: 09.06.1993
(73) Proprietor: SUOMEN ITSENÄISYYDEN JUHLARAHASTO SITRA, SF-00121 Helsinki (FI)
(72) Inventor: SUOMINEN, Hannu, Lauri, SF-00690 Helsinki (FI)
(74) Representative: Bühling, Gerhard, Dipl.-Chem.
(86) International application number: FI9100150
(87) International publication number: WO9118044

(56) References cited:
- WO-A-88/06609
- DE-A- 3 728 774
- SE-B- 404 931

## Description

The invention is concerned with a method of preparing a biologically degradable cover films, which films consist of synthetic polymers and biologically degradable polymer, said biologically degradable polymer being a grafted copolymer.

The invention is also concerned with biologically degradable cover films that consist of synthetic polymer and said biologically degradable polymer.

It is known to grow plants in greenhouses, the covers of which have been prepared of glass or plastic. A clear cover can be penetrated by both short wave and long wave radiation in the range of the visual light. It is known that the covers of the greenhouses transmit more short wave radiation than long wave radiation. Thus, the heating effect of the light in the greenhouses takes place so that the short wave radiation is converted to long wave radiation inside the greenhouse.

The principal of the greenhouse has in earlier known ways been used on the fields in such a way that the covers have been formed to a bow above the surface of the field or so that the cover has been applied on the surface of the earth. The cover materials in these applications on the fields have been plastic or paper through which the plants are growing. With this known technic the following advantages have been achieved: the temperature has increased by using transmitting covers so that the short wave radiation has been converted to heat. The evaporation of the water can be prevented also by using paper covers. Furthermore, by using a film that transmits light, the growing of weeds under the cover has been hindered.

The need of weed-killers have been the same by using clear covers as by growing without any cover, in some cases even more, because by using a clear cover the humidity is concendated on the inside of the film and thus good conditions are formed for the growth of weeds around the plants to be grown. Furthermore, the fact that the earth is exposed between the films (the earth terracing used to fasten the film), causes that the growing conditions for weed are improved.

The previously known films have often been decomposed to small pieces by the effect of ultraviolet radiation. It has been tried to achieve such films that by means of ultraviolet radiation should be degraded so far that micro organisms should be able to continue the degradation and to degrade the films finally. The degradation has however, in these previously known film solutions, not been complete. In the practice, the edge of the cover film covered by the earth retains in the field because the UV-radiation cannot transmit the earth to degrade the film. Even a little piece of earth or a dust layer on the film hinders the energy, that degrades the polymer bonds, of the UV-light to enter the film. In the theory, the films are degraded by means of UV-light also after that the plants begin to cover them, to such small pieces that they do not cause problems in the field. In the practice, the degradation is not complete by the act of the UV-light, which results in more and more plastic material in the field because the synthetic polymer itself in the so called composite films is not degraded biologically. The synthetic polymers do not absorb water and as the biological degradation is taken place by means of the enzymes produced by microbes, no biological degradation can occur because the enzymes only act in the presence of water.

Synthetic polymers, the molecules of which consists of for example about 12000 successive carbon atoms should be degraded to about 500 pieces with lengths of some ten carbon atoms before the rate of the biological degradation has any importance. However, the structure of the plastic films will be essentially changed already in the stage wherein the polymer has been degraded to pieces containing thousands of carbon atoms. A plastic film, degraded in this way, might cause serious nature problems. Because of this, the use of films of this type has been decreased recently. Problems have also arisen from the toxic rests that possibly are caused by the degradation.

Also such methods are previously known in which the film is taken away from the field after that the growing season has come to the end. The use of such films is however very expensive. Furthermore, in previously known methods, there has mainly been used very thin films, because the preparation of these is cheaper. It is however, difficult to remove such films from the field because the films are easily decomposed. In previously known solutions, the film has covered only about 50-70 % of the growing surface because it has been necessary to leave exposed earth between the films for the fastening terracing.

In the earlier application FI-891905 (FI-Patent No. 83920) of the applicant, the degradation problem of the film has been improved so that the film is fastened to the surface to be grown by quiltings so that the whole growing surface is covered by the film. In the solution of the FI-application 891905 the degradation of the film by means of UV-light is improved because the whole film is on the ground. However, the problem is still that even if a UV-degradable film is used, more and more plastic is retained in the field, because the known films are not degraded biologically.

The biologically degradable materials can be degraded thanks to their chemical structure, by the act of micro organisms, as mushrooms and bacteria, when they are put to the earth or are in another way brought in contact with micro organisms, in conditions in which the microbes can grow. The term "biologically degradable" is here used for a degradation of the type in which the degradation is taken place by the act of living organisms as micro organisms. The term "degradable" is used when reference is made for example to the degradation of ethylene polymers which by the act of different additives or other substances can be degraded into pieces. No micro organisms is connected to a degradation of this type.

Attempts have been made to study the biological degradation of plastic films and even to show it in different ways, for example by means of mould cultures. (Compare with the ASTM-standard, STM G 21-70 1980, that has been used in the investigations of so called biological degradation of plastic materials). The growth of mould on plastic film has, however, not showed anything about the biological degradation in spite of the growing of the mould. The growth of mould on plastic films has been considered to be in correlation to the amounts of additives in the films but with no influence on the synthetic polymer itself.

Generally it can be stated that the film material is degraded into pieces if it does not contain antioxidants, but contains for example UV-catalysts, that cut the C-C bound of the synthetic polymer molecule. If the plastic molecules contain double bounds, these are degraded by less energy even without any catalyst.

The biological degradation of the synthetic material requires hydrophillic water soluble groups. The polymer must be cut so that such a hydrophillic chemical group is formed that can be degraded enzymatically, for example a carbonyl or carboxyl group. The degradation product of the biological degradation of the film must be water, carbon dioxide and biomass.

Several attemps have been made to prepare such biologically degradable films that consist of a combination of a synthetic polymer and a biopolymer in which generally a catalyst sensitive to UV-light has been added. A substance that degrades synthetic polymers by using light as catalyst is known for example from the patent publication EP-230 143.

It has been thought that the synthetic plastic material is able to absorb water if hydrophillic group are included in it by means of a biologically degradable polymer. Starch is the cheapest biologically degradable polymer for this intention, the use of which in addition to this should decrease the production costs of the film markable because its price has been lower than that of the polyethene. As the gelatinized starch alone forms a very brittle film, that is sensitive to water, it is commonly known that the starch must be combined with other substances that can be used in the film to get a satisfactory product. Polyethene (PE) is the most commonly used synthetic polymer for preparing films with wished physical properties. Earlier attemps to produce PE-films with blowing technic from compositions with a high proportion of starch > 30 % (w/w) have however not been successful. The reason is that starch is a very coarse material (particle size 20-150 µm) that has been a hinder to make thin films. Furthermore, in the blowing technic, the starch particle and the melt plastic mass are moving with different speeds in a blowing technic that is carried out with normal blowing temperatures (170-200°C), why a brittle and breakable film material with holes is formed. In other words, it has not been possible to make such a film by blowing, as the film has become too thick.

Earlier, it has also been tried to bring chemical bonds around the starch particles to facilitate the mixing of the synthetic polymer. Such films has been described for example in the patent publications US-4 337 181, GB-1 487 050 and GB- 1 485 833. In these known films the enzymes can in theory degrade the material, because the material is at least in the theory wet to some extent. This is however, a very expensive technic and in spite of that the material has disadvantages: bad tensile strength, thick films must be made, the film does not stretch.

It has also been tried to add other reactive groups in the film material, for example double bonds. When the material contains double bonds and it reacts with oxygen and a metal catalyst (for example Fe3+), reactive peroxides -C-O-O-C- are formed. Thus, free oxygen atoms and radicals are formed by the act of which the bonds between the carbon atoms are degraded and for example carboxyl groups and cut carbon hydrogen chains are formed. This phenomena has been used in films that contain a metal catalyst (for example the patent publication EP-A 0 230 143). When the film material now contains carboxyl groups RCOOH, they can be degraded by the act of enzymes from the micro organisms if they are surrounded by water. In other words, reactive groups and catalysts have been added to the film material by means of which biologically degradable RCOO- -groups are achieved in given conditions. Also these materials are expensive to make.

In the US-patent 4 337 181 starch, ethylene acryl acid copolymer and optionally polyethene have been mixed and blown up to a film by using additives that neutralize a part of the functional acid groups of the copolymer. This method makes use of a wet starch possible, but requires expensive additives.

According to the EP patent application 0 230 143, the photodegradation must be facilitated by using photo degradable substances that comprise a photo sensitive substance and an ethylene/carbon monoxide copolymer. Preferably, the photo sensible substance is a heavy metal dithiocarbamate or a heavy metal dithiophosphonate. As already was said, ethylene copolymers that contain carbonal groups, are degradable by means of ultraviolet light but the life time of those is not long enough.

Additionally, US patent 3 901 838 is mentioned as prior art and it comprises films that consist of a biologically degradable thermoplastic polymer and a degradable ethylene polymer and the mixing is carried out in a conventional mixer and the powdering in a mill. From GB patent 1 483 838 such a biologically degradable film is known that comprises a biologically degradable substance that is homogenously dispersed in a material forming a non-biologically degradable film that is not dissolved in water, the biologically degradable substance being present in an amount of 40-60 percent of weight in the film material. In this solution the biologically degradable substance is a finely divided substance that absorbs water. In the solution of this patent, the film is made of an aqueous dispersion of these substances. In this solution the film is in other words made from a dispersion in organic solvents or in water systems and because of the physical properties it is not usable as a growing film at all.

As a summary, it is furthermore stated that the degradation of cover films is a two-parted problem. On one hand they are desired not to be degraded as long as they are used. On the other hand, when the use of these is passed they should necessarily be returned to the ecosystem in a form that does not cause harms in the environment. Then the macromolecules should be split into smaller compounds that in turn could be used as food for the organisms and therethrough they should be returned to the food cycle. The major part of the commercial vinyl plastics, polyethylenes, polypropylenes, polystyrenes, polyvinyl chlorides and the aromatic polyesters stands the microbial degradation. The only polymers that are degraded biologically are far oxidated products as for instance derivatives of cellulose, aliphatic polyesters and polyurethanes on polyester basis. As they can be degraded to water soluble short chains, they can be used as food by the microbes. Treatments that lower the molecule weight and maybe also changes the chemical structure, exposes the polymers for the degradation action of the microbes. When for example polyethylene is acidified with nitrous acid, waxy compounds on which thermophilic mushrooms can grow, are received. An intensive ultraviolet radiation also causes chemical changes in the plastics, as for example forming of carbonyl groups, which ketones are a part of the metabolism of the micro organisms.

UV-radiation, photo degradable additives, the morphological surface, additives, anti oxidants and the molecule weight have thus an influence on the biological degradation of the polyethene. The biological degradation of paraffine can be compared with the degradation of polyethylene. In the beginning of the degradation, the main influencing factor is the UV-light and/or oxidation agents, but once the carbonyl groups have been produced, the micro organisms attack those and degrade the polyethylene chain to shorter fractions, carbon dioxide and water being the end products. The biological degradation and the ambient factors have a strong synergism, why the result never can be explained only by means of one factor because the degradation is a combined result of factors including the temperature, UV-light, water, the microbes and their food. The presence of water is always a condition for the biological degradation.

In the earlier patent applications FI-894734 (FI-Patent No. 88724), FI-894735 and FI-894736 (FI-Patent No. 91643) of the applicant there has been presented films, the degradation of which begins with the act of the UV-light and which after this degradation also are degraded biologically, but which films in spite of that are strong enough over one growing period to be destroyed thereafter also biologically during the following growing period. These films bind water and are thus biologically degradable. They are degraded in two stages, first they are disintegrated and thereafter they are degraded finally biologically. They stand the application conditions and are disappeared at the latest during the following growing period, in other words the final biological degradation is not intended to happen until after the first growing period. The starting material of these is a synthetic polymer, for example polyolefine, e.g. polyethylene, polypropene and a biologically degradable polymer, for example starch or cellulose.

In the method of FI-application 894736 (FI-Patent No. 91643) there has been added microbes in the film during the preparation stage of this, which microbes produce enzymes, mainly in the form of spores, the intention of which is to take part in the biological degradation of the film. In this way very small particles of the biopolymer is achieved, thanks to which the proportion of the biopolymer of the film can be high and thus the film is very biologically degradable but is still strong. The enzymes, namely, split the polymer to smaller macromolecules and loose moleculary small compounds from the surface of the biopolymer particles. When the wished particle size is achieved, in a preferred embodiment of the invention, vegetable oil is emulgated in the system, whereat the biopolymer particle coated with enzymeprotein and the microbe spores are coated with vegetable oil. The particles coated with oil are then removed from the suspension and they are washed after which they are dryed and pulverized. The final film is prepared in a film extruder wherein the biopolymer is mixed with synthetic polymer and with usual additives generally used in films.

In FI-application 894735, the biopolymer consists of plant material with a high oil content, which material is pulverized and which is directly used for the preparation of the film.

In the FI-application 894734 (FI-Patent No. 88724) enzymes are used as in FI-application 894736 but instead of microbes the enzymes in question are added directly.

In the above mentioned FI-applications 894736, 894735 and 894734 the synthetic polymer to be used in the invention can be any olefine and its melting index is not a problem in itself. Both linear components, as LLDDPE, LDPE or HDPE or branched forms can be used. However, given properties are' required for the polymers. For example, the synthetic and biologic material must fit, in other words, the biopolymer that is mixed with the synthetic polymer must be able to stand the melting temperature of the synthetic polymer in the preparation of the possibly used premixed preparate or masterbatch and in connection with blowing and drawing of the film. The biopolymer can be homogenously distributed in the synthetic polymer, due to the small particle size and the way of coating. Furthermore, the polymer must not contain anti oxidants that prevent the degrading effect of the UV-light and the peroxides. The biopolymer to be used can be made of different starting materials for example, starch, cellulose, ryeflour, wheat flour and other biological materials that are milled. In earlier attempts to mix biopolymers with synthetic polymer, the particle size, that has been too big has caused problems and it has not been possible to make a thin film and in addition to that the big particles are difficult to mix in the melt mass. In the above applications there are used such small particles (smaller than 10 µm), preferably 0,5-5 µm, that a film with a thickness of 20-40 µm can be prepared, in some cases even 10 µm. When the particle size is that small as in the invention, in the synthetic polymer film, there can easily be included 40 % such biopolymer material that has not been modified chemically. When the wished particle size has been achieved, vegetable based oil and an emulgator is added to the suspension to be vigorously stirred. Then a vegetable based oil layer is formed on the enzyme protein on the surface of the particle, for example soya, rape or an other corresponding oil. A pure mixing of the biopolymer and the oil does not lead to the wished end result, but the biopolymer particles are dissolved in water and for example calcium chloride (CaCl₂) is added to the suspension so that the ionic strength is suitable for the enzyme.

The ready particles, coated with protein and oil, is wished to be separated from the suspension and from the small molecules dissolved in the suspension, in the first hand from the dextrine and from lower sugars in case of starch. It is extremely important that the obtained biopolymer particles are free from split products as otherwise big particles are reformed in the preparation of an optimal masterbach and during the preparation of the film and for example the dextrines are combusted in the preparing temperatures. The enzyme has for example split dextrines from starch to obtain small particles. The split dextrines must be removed from the mixture why the particles are centrifugated or decanted. As it is important that all of the dextrines are removed, the particles are washed with water before drying. Then they are pulverized and mixed with the other film material. The particles must be separated by decanting or centrifugation, whereat the water phase is removed, not directly by drying, because then aggregates of particles are formed that contain small molecules, for example dextrines. After the separation the particles are dried from the suspension by for example spray drying. After the drying the particles are pulverized. The pulverization is most preferably carried out by the so called FP method (a fine pulverization technology developed by Oy Finnpulva Ab, reference is made to their brochure). This method is carried out so that the particles are colleded in high pressure and in a little volume rapidly against each other, they are in other words not pulverized mechanically. Air and the mixed material to be pulverized in this is lead via two notches to a collision line in a suitable angle. The temperature can be kept in a wished range why the material will be absolutely dry. It is however possible, even if not preferable, to carry out the pulverization also with other previously known methods, for example by mills. After the pulverization it is preferable to granulate the particles into granulates together with the synthetic polymer in a screw extruder. The granulates contain about 60-80 % biopolymer. These granulates form a so called masterbatch, or a premixed preparate, that contains biopolymer and synthetic polymer. A melt mass, coming out from the screw extruder, is split to pellets and cooled in an air stream. The pellets can also be cooled with water and thereafter be dried. A suitable synthetic polymer is for example polyethene. The granulation can not be carried out with any polymer, but this must have the right melting index depending on the biopolymer. These granulates form the premixed preparate of biopolymer and synthetic polymer.

If it is wished to include a catalyst in the film, also a second premixed preparate is made in granulate form that consists of a metal catalyst and a synthetic polymer that also is carried out in an extruder. The metal catalyst is for example anhydrous FeCl₃ and in this premix its concentration is 0,1-1 %. Other usable metal catalyst here are for example Cu²⁺, Se²⁺, Zn²⁺, in other words known oxidation agents for vegetable based oils that are necessary for example to form carbonyl groups, when the C-C bonds are cut. The carbon chains can then be degraded biologically with the beginning from these groups.

The melting index of the used polymers is preferably about four, which means that the preparation temperature of the plastic film can be 150°C.

All those compounds that are wished to be present in the final film are mixed in the film extruder.

The degradation age of the final film is longer the less or the bigger particles are used and on the other hand the more oil or catalyst is used, the shorter degradation age.

The catalyst is kept separate until it is added to the film in an as late stage as possible, but generally it is added to the film because it is not sure that there is enough catalyst in the earth or that the degradation effect of the UV-light is sufficient. The material of invention is essentially dry until it will reach the earth. The amount and the size of the particles of the biopolymer are selected so that there are contacts between them so that they are able to absorb water, become wet and thus to be degraded by means of micro organisms. The film will not break in the required time when the proportional amounts of the biopolymer and the synthetic polymer are the right. If there are too much particles in the film material the strength properties become worse. By means of the invention a required amount of the biopolymer is homogenously included in the film, also in thin films so that it can be degraded biologically. The earth gets new nutritives when the film is degraded because all the additives are of good quality and act as earth improving agents when they are degraded.

The film of the invention can also be used as packing material.

These inventions afford a new advantageous way to include reactive groups in film materials as the biological material is coated with chemically reactive material, with vegetable oil, the effect of which is directed to the carbon-carbon bonds of the polymer and the coatings of the particles of the invention have an positive influence on their mixing properties with synthetic polymers.

The aim of this invention is to develope a method of preparing such a combination film that contains a higher proportion of biologically degradable material than earlier but which still is thin and stands the application conditions.

More in detail, the aim of this invention is to achieve a smaller particle size of the biopolymer, thanks to which more biopolymer can be added in the film by not loosing in strength and thanks to which the film becomes transparent, which is very important in some applications.

The aim of the invention is furthermore to achieve a more simple preparation method of the film than earlier which thus is time saving and more economic.

The aim of the invention is furthermore to further develope the films and preparation methods of the above decribed FI-applications 894734, 894735 and 894736.

According to the present invention a method of preparing a biologically degradable cover film is provided which film consists of synthetic polymer and biologically degradable polymer, **characterized in that** the method comprises the following steps:
a) a side chain is coupled to the OH-groups of said biologically degradable polymer, which side chain is unsaturated and contains functional end groups as a result of which coupling the biologically degradable polymer is cleaved to smaller particles as bonds of the polymer are interrupted by a radical reaction caused by the side chain,
b) when the wished particle size is achieved, vegetable oil is added to the system after drying and pulverizing and the particles received in step a) are coated with vegetable oil,
c) the particles received from the foregoing steps that are coated with oil are mixed with synthetic polymer and with possible additives or catalyst and are blown to as final film in a film extruder in a way that is known in itself either by direct blowing or by making premixes at first,
wherein said side chain is polystyrene, butadiene or polyacrylamide with a chain length of ca. 5-100 carbon atoms, said biologically degradable polymer is a grafted copolymer between a biologically degradable polymer that contains OH-groups and an unsaturated polymer that contains functional groups, and
said biologically degradable polymer that contains OH-groups is starch or cellulose.

The cover film of the invention is mainly characterized in that said biologically degradable polymer is a grafted copolymer of a biologically degradable polymer that contains OH-groups and an unsaturated polymer that contains functionally groups.

In additon to the vegetable oil a layer of enzymes can furthermore be added, for example α-amylase or cellubios.

The preferred embodiment forms of the invention have the characteristics of the subclaims.

The blowing stage of the plastic film of the invention can be carried out with the same methods as earlier known films that comprise synthetic polymer, biopolymer and reactive chemical groups, for example with methods of the patents mentioned in the part of this application that describes prior art.

In the following there is a detailed decription of the method of the invention which description is not intended to restrict the invention to details.

If the films is prepared with direct film blowing, the synthetic polymer is preferably polyethylene and preferably LDPE or LLDPE etc. stamylan or stamylax (that is manufactured by Bow Chemicals) and if premixes are formed, the synthetic polymer is preferably 20 % LDPE (M.I. = 4).

In the invention is used as biopolymer that contains OH-groups (biologically degradable polymer that contains OH-groups), starch or cellulose.

According to the invention unsaturated sidechains that contain functional groups are bound to the OH-groups of the biopolymer (biologically degradable polymer), which sidechains are polystyrene, butadiene or acrylamide.

By means of special reactions these chains can be coupled to the OH-groups of the biopolymer, which act so that the α-1,4-bonds of the starch or cellulose are interrupted.

The side chain preferably should not contain more than ca 100 carbon atoms. It shall be unsaturated and contain functionalic end groups. In addition to the above mentioned characteristics it can be an unsaturated polymer that contains an amide, an amino acid, a carboxylic or a carbonyl group. One aspect is that disturbing chlorous compounds should not be formed. The more double bonds the side chain contains, the more preferable it is and it shall be terminated by a functionalic group.

The biopolymer of the inventions is in other words a grafted copolymer.

The above reaction is carried out so that the biopolymer is suspended in water together with a compound that acts as a side chain. The particle size will depend on for example the grafting degree, which is 2-3 %. The grafting degree must not be too high in which case the biopolymer becomes unusable and loose a part of its properties. If for example there is too much polyacrylamide grafted, the result is a gluelike "plastic" that has the character of an acrylic plast and then it can not be dried why the grafting degree shall be suitably low. The particle size can furthermore be regulated by the reaction conditions or the catalyst, for example with ferrosulphate. A particle size of ca 100-1000 nm is achieved with the method of invention, being 500 nm in average. A great advantage with this is that a transparent film is achieved with the method. If the particle size of the biopolymer exceeds the value of 1 µm, the film will become untransparent because the granules then can be seen by the eye. The visible limit is a diameter of ca 1 µm in an amount of > 10⁶ pieces/ml.

The way by which the biopolymer is splitted in the invention has a great importance, in the view of making the process simpler and the degradation of the film better, because it makes it possible that the biopolymer particles in the preferable embodiment of the invention can be coated with oil without any emulgator system and without a liquid fase, in other words with no medium at all. In the above FI-applications 894734, 894735 and 894736 the oil coating had to be carried out by means of an emulgator. In this case it was not possible to use as much oil as wished, because the system received only on given amount and the rest of it floated on the surface. A high oil amount is preferable, because it is biologically degradable and increase the proportion of degradable material in the film and have an influence on the degradation of the synthetic polymer via a peroxide reaction.

Such small particles that are achieved in the invention do not form a solid material because they are so small particles that they act like a liquid and when these particles are spray-dried they form aggregates that are easy to handle and coat with oil. During the blowing to a film the aggregates return to initial particles and are well mixed with the melt polymer.

In the method of the invention the biopolymer particles coated with oil can be pelletisized and a premix can be formed of those together with synthetic polymer in the same way as in the earlier said FI-applications of the applicant or the components can be blowed to a film directly. A direct blowing to a film is a good advantage because it is simple and decrease the process steps. In this invention better results are received with direct film blowing than in the earlier said applications of the applicant because of the small particle size and better mixability and thus a stronger film is achieved.

In the method of the invention ca 98 % biopolymer particles and ca 2 % side chain polymer is used for the cleaving reaction which cleaves the biopolymer and a particle size of ca 200 nm is achieved. These are spray-dried and then aggregates of ca 50 µm are achieved.

The degradability and transparence of the film of the invention can be regulated by means of the proportion of the biopolymer, the particle size and by means of the catalyst.

Thanks to the small particles a thinner and stronger film than earlier is received, for example 10-100 µm.

The oil coated method of the invention, which is carried out without any emulgator, furthermore has the advantage that the wasted material of the biopolymer is avoided, as earlier the enzymes cleaved the biopolymer so that the lower sugars were split away from the biopolymer which then had to be removed from the system.

As the process of the invention now is simpler also for example savings in the energy is achieved and it is not necessary to prepare premixes. The property of the film that it contains more biopolymer now, has still the advantage that it is cheaper.

The reason to include catalyst in the film is in general that the degradation of the film is garanteed in a way undependent of the UV-light.

As a summary we state that the best advantages of the invention is the small particle size by means of which a big proportion of biopolymer can be achieved and the possibility to use direct film blowing, the oil coating without medium and thus a simpler process.

In the following, the patent claims are presented. The various details of the invention defined by the patent claims can be varied in the scope of the invention.

## Claims

1. Method of preparing a biologically degradable cover film which film consists of synthetic polymer and biologically degradable polymer, **characterized in that** the method comprises the following steps:
a) a side chain is coupled to the OH-groups of said biologically degradable polymer, which side chain is unsaturated and contains functional end groups as a result of which coupling the biologically degradable polymer is cleaved to smaller particles as bonds of the polymer are interrupted by a radical reaction caused by the side chain,
b) when the wished particle size is achieved, vegetable oil is added to the system after drying and pulverizing and the particles received in step a) are coated with vegetable oil,
c) the particles received from the foregoing steps that are coated with oil are mixed with synthetic polymer and with possible additives or catalyst and are blown to as final film in a film extruder in a way that is known in itself either by direct blowing or by making premixes at first,
wherein said side chain is polystyrene, butadiene or polyacrylamide with a chain length of ca. 5-100 carbon atoms, said biologically degradable polymer is a grafted copolymer between a biologically degradable polymer that contains OH-groups and an unsaturated polymer that contains functional groups, and
said biologically degradable polymer that contains OH-groups is starch or cellulose.

2. Method of claim 1, **characterized in that** the particle size of the biopolymer is regulated by means of the reaction conditions, amounts of the reagents and by means of a catalyst.

3. Method of claim 2, wherein said catalyst is ferrosulphate.

4. Method of any of the preceding claims, **characterized in that** said unsaturated polymer that contains functional groups is polystyrene, butadiene or polyacrylamide.

5. Method of any of the preceding claims, **characterized in that** the bonds that are interrupted by the radical reaction are α-1,4-bonds of starch or cellulose.

6. Method of any of the preceding claims, **characterized in that** particles are prepared in steps a-b) with a particle size of 100-1000 nm, 500 nm in average.

7. Method of any of the preceding claims, **characterized in that** the proportion of biologically degradable polymer in the film is 5-60 %, preferably ca. 20 %.

8. Method of any of the preceding claims, **characterized in that** the proportion of the side chain in the biologically degradable polymer is 1-5 %.

9. Biologically degradable cover film that consists of synthetic polymer and biologically degradable polymer, **characterized in that** it comprises a grafted copolymer between a polymer that contains OH-groups and an unsaturated polymer that contains functional groups, in which the biologically degradable polymer is firmly distributed in the film in form of particles of 100-1000 nm around which there is a vegetable oil film, wherein said biologically degradable polymer that contains OH-groups is starch or cellulose, and said unsaturated polymer that contains functional groups is polystyrene, butadiene or polyacrylamide.

10. Film of claim 9, **characterized in that** the thickness of it is ca 10-100 µm.

11. Film of claim 9 or 10, **characterized in that** it is transparent.

12. Film of any of claims 9 to 11, **characterized in that** the synthetic polymer is LDPE or LLDPE when the film is blown directly from the mixture of the biopolymer and synthetic polymer and possible other compounds and the melting index M.I. = 4 of the synthetic polymer when there is prepared premix granulates from said mixture before the film blowing.

## Patentansprüche

1. Verfahren zur Herstellung einer biologisch abbaubaren Abdeckfolie, wobei die Folie aus einem synthetischen Polymer und einem biologisch abbaubaren Polymer besteht,
**dadurch gekennzeichnet, daß**
das Verfahren die nachstehenden Schritte umfaßt:
a) eine Seitenkette wird an die OH-Gruppen des biologisch abbaubaren Polymers gebunden, wobei die Seitenkette ungesättigt ist und funktionelle Endgruppen enthält, wobei als Ergebnis der Verknüpfung das biologisch abbaubare Polymer in kleinere Teilchen aufgespalten wird, da Bindungen des Polymers durch eine durch die Seitenkette hervorgerufene Radikalreaktion unterbrochen werden,
b) wenn die gewünschte Teilchengröße erreicht ist, wird nach dem Trocknen und Pulverisieren ein planzliches Öl zu dem System gegeben und die in Schritt a) erhaltenen Teilchen werden mit dem pflanzlichen Öl beschichtet,
c) die aus den vorstehenden Schritten erhaltenen Teilchen, die mit dem Öl beschichtet sind, werden mit dem synthetischen Polymer und mit möglichen Additiven oder Katalysatoren gemischt und in einem Folienextruder auf bekannte Art, entweder durch direktes Blasen oder indem zuerst Vormischungen hergestellt werden, zu einer Fertigfolie geblasen,
wobei die Seitenkette aus Polystyrol, Butadien oder Polyacrylamid mit einer Kettenlänge von ca. 5 bis 100 Kohlenstoffatomen besteht, und das biologisch abbaubare Polymer aus einem Pfropfcopolymer aus einem biologisch abbaubaren Polymer, das OH-Gruppen enthält, und einem ungesättigten Polymer, das funktionelle Gruppen enthält, besteht, und
wobei das biologisch abbaubare Polymer, das OH-Gruppen enthält, Stärke oder Cellulose ist.

2. Verfahren nach Anspruch 1,
**dadurch gekennzeichnet, daß**
die Teilchengröße des Biopolymers mittels der Reaktionsbedingungen, der Menge der Reagentien und mittels eines Katalysators reguliert wird.

3. Verfahren nach Anspruch 2,
**dadurch gekennzeichnet, daß**
der Katalysator Eisen(II)-sulfat ist.

4. Verfahren nach einem der vorstehenden Ansprüche,
**dadurch gekennzeichnet, daß**
das ungesättigte Polymer, das funktionelle Gruppen enthält, Polystyrol, Butadien oder Polyacrylamid ist.

5. Verfahren nach einem der vorstehenden Ansprüche,
**dadurch gekennzeichnet, daß**
die Bindungen, die durch die Radikalreaktion unterbrochen werden, α-1,4-Bindungen von Stärke oder Cellulose sind.

6. Verfahren nach einem der vorstehenden Ansprüche,
**dadurch gekennzeichnet, daß**
die Teilchen in den Schritten a-b) mit einer Teilchengröße von 100 bis 1000 nm, im Durchschnitt 500 nm, hergestellt werden.

7. Verfahren nach einem der vorstehenden Ansprüche,
**dadurch gekennzeichnet, daß**
der Anteil des biologisch abbaubaren Polymers in der Folie 5 bis 60%, bevorzugt ungefähr 20%, beträgt.

8. Verfahren nach einem der vorstehenden Ansprüche,
**dadurch gekennzeichnet, daß**
der Anteil der Seitenkette in dem biologisch abbaubaren Polymer 1 bis 5% beträgt.

9. Biologisch abbaubarer Abdeckfolie, die aus einem synthetischen Polymer und einem biologisch abbaubaren Polymer besteht,
**dadurch gekennzeichnet, daß**
sie-ein Pfropfcopolymer aus einem Polymer, das OH-Gruppen enthält, und einem ungesättigten Polymer, das funktionelle Gruppen enthält, umfaßt, wobei das biologisch abbaubare Polymer in der Folie in Form von Teilchen mit 100 bis 1000 nm stabil verteilt ist, die von einem pflanzlichen Ölfilm umgeben sind, wobei das biologisch abbaubare Polymer, das OH-Gruppen enthält, aus Stärke oder Cellulose besteht, und das ungesättigte Polymer, das funktionelle Gruppen enthält, Polystyrol, Butadien oder Polyacrylamid ist.

10. Folie nach Anspruch 9,
**dadurch gekennzeichnet, daß**
ihre Dicke ungefähr 10 bis 100 µm beträgt.

11. Folie nach Anspruch 9 oder Anspruch 10,
**dadurch gekennzeichnet, daß**
sie transparent ist.

12. Folie nach einem der Ansprüche 9 bis 11,
dadurch gekennzeichnet, daß
das synthetische Polymer Polyethylen niedriger Dichte (LDPE) oder LLDPE ist, wenn die Folie direkt aus der Mischung aus dem Biopolymer und dem synthetischen Polymer und möglicherweise anderen Verbindungen geblasen wird, und der Schmelzindex M.I. des synthetischen Polymers gleich 4 ist, wenn vor dem Folienblasen aus der Mischung ein Vormischungsgranulat hergestellt wird.

## Revendications

1. Procédé pour la préparation d'un film de couverture biodégradable, lequel film consiste en polymère synthétique et en polymère biodégradable, **caractérisé en ce que** le procédé comprend les étapes suivantes :
a) une chaîne latérale est couplée aux groupes OH du polymère biodégradable, laquelle chaîne latérale est insaturée et contient des groupes d'extrémité fonctionnels, couplage à la suite duquel le polymère biodégradable est divisé en plus petites particules, les liaisons du polymère étant interrompues par une réaction radicalaire provoquée par la chaîne latérale ;
b) lorsque la taille particulaire souhaitée est obtenue, on ajoute de l'huile végétale au système après séchage et pulvérisation et les particules obtenues à l'étape a) sont revêtues d'huile végétale ;
c) les particules obtenues aux étapes précédentes et qui sont revêtues d'huile sont mélangées au polymère synthétique et à des additifs éventuels ou catalyseur et on procède au soufflage en un film définitif dans une extrudeuse de film d'une manière connue per se, par soufflage direct ou en réalisant d'abord des prémélanges,
procédé dans lequel la chaîne latérale est du polystyrène, du butadiène ou du polyacrylamide d'une longueur de chaîne d'environ 5-100 atomes de carbone, le polymère biodégradable est un copolymère greffé entre un polymère biodégradable qui contient des groupes OH et un polymère insaturé qui contient des groupes fonctionnels, et
le polymère biodégradable qui contient des groupes OH est l'amidon ou la cellulose.

2. Procédé selon la revendication 1, **caractérisé en ce que** la taille particulaire du biopolymère est régulée par le biais de conditions réactionnelles, des quantités de réactifs et au moyen d'un catalyseur.

3. Procédé selon la revendication 2, dans lequel le catalyseur est du ferrosulfate.

4. Procédé selon l'une quelconque des revendications précédentes, **caractérisé en ce que** le polymère insaturé qui comprend des groupes fonctionnels est du polystyrène, du butadiène ou du polyacrylamide.

5. Procédé selon l'une quelconque des revendications précédentes, **caractérisé en ce que** les liaisons qui sont interrompues par la réaction radicalaire sont des α-liaisons 1,4 d'amidon ou de cellulose.

6. Procédé selon l'une quelconque des revendications précédentes, **caractérisé en ce que** les particules sont préparées aux étapes a-b) avec une taille particulaire de 100-1000 nm, 500 nm en moyenne.

7. Procédé selon l'une quelconque des revendications précédentes, **caractérisé en ce que** la proportion de polymère biodégradable dans le film est de 5-60 %, de préférence environ 20 %.

8. Procédé selon l'une quelconque des revendications précédentes, **caractérisé en ce que** la proportion de chaîne latérale dans le polymère biodégradable est de 1-5 %.

9. Film de couverture biodégradable qui consiste en polymère synthétique et en polymère biodégradable, **caractérisé en ce qu'**il comprend un copolymère greffé entre un polymère qui contient des groupes OH et un polymère insaturé qui contient des groupes fonctionnels, dans lequel le polymère biodégradable est solidement réparti dans le film sous forme de particules de 100-1000 nm entourées d'un film d'huile végétale, dans lequel le polymère biodégradable qui contient des groupes OH est de l'amidon ou de la cellulose et le polymère insaturé qui contient des groupes fonctionnels est le polystyrène, le butadiène ou le polyacrylamide.

10. Film selon la revendication 9, **caractérisé en ce que** son épaisseur est d'environ 10-100 µm.

11. Film selon la revendication 9 ou 10, **caractérisé en ce qu'**il est transparent.

12. Film selon l'une quelconque des revendications 9 à 11, **caractérisé en ce que** le polymère synthétique est LDPE ou LLDPE lorsque l'on procède au soufflage du film directement à partir du mélange du biopolymère et du polymère synthétique et d'autres composés éventuels et l'indice de fusion M.I = 4 du polymère synthétique lorsque l'on prépare des granulats de prémélange à partir de ce mélange avant le soufflage du film.
